# EUROPEAN PATENT SPECIFICATION

(11) **EP 1 331 850 B1**
(45) Date of publication and mention of the grant of the patent: **03.01.2007**
(21) Application number: 01985665.7
(22) Date of filing: 10.09.2001
(51) Int. Cl.: A21D 8/04, A21D 2/18, A21D 2/22

(54) **LIQUID BREAD IMPROVING COMPOSITIONS**
FLÜSSIGE BROTVERBESSERUNGSMITTEL
COMPOSITIONS LIQUIDES D'AM LIORATION DU PAIN

(30) Priority: 28.09.2000 EP 00203395
(43) Date of publication of application: 06.08.2003
(73) Proprietor: DSM IP Assets B.V., 6411 TE Heerlen (NL)
(72) Inventor: SCHOONEVELD-BERGMANS, Margot, Elisabeth, Françoise, NL-2625 KK DELFT (NL); RODRIGUEZ ARANDA, Javier, 08392 Barcelona (ES)
(74) Representative: Matulewicz, Emil Rudolf Antonius
(86) International application number: PCT/EP2001/010456
(87) International publication number: WO 2002/026044

(56) References cited:
- WO-A-01/70036
- GB-A- 1 357 164
- US-A- 4 243 543
- US-A- 5 491 078
- US-A- 6 039 982
- US-A- 6 110 508
- PATENT ABSTRACTS OF JAPAN vol. 2000, no. 08, 6 October 2000 (2000-10-06) & JP 2000 125823 A (FIBURO SEIYAKU KK), 9 May 2000 (2000-05-09)

## Description

The present invention relates to liquid bread improving compositions. The invention also relates to a process for the preparation of a dough using said liquid bread improving compositions as well as to a process for the preparation of a baked product from such a dough.

Bread production starts with the preparation of a dough. Basic doughs are made from cereal flour such as wheat flour, water, optionally salt and a leavening agent such as baker's yeast. After mixing, moulding and fermentation, the leavened dough is baked to give bread. In order to improve the bread making process and the quality of the resulting bread, bread improving substances are usually added. Aspects of the bread which are improved by these substances include volume (increased), crumb structure and softness. Aspects of the dough that can be improved are its elasticity, plasticity and stability which also lead to improved machinability and gas holding capacity.

Suitable bread improving substances include compounds such as oxidising and reducing agents, emulsifiers, fats, bleaching agents and many others. On the other hand, several enzymes are nowadays used as a result of a tendency to replace such chemicals with naturally occurring enzymes. Suitable enzymes which are widely used for this purpose are found in the classes of carbohydrases, in particular those acting on carbohydrates such as starch, cellulose, hemicelluloses such as arabinoxylans), protein modifying enzymes (acting on proteins such as gluten), fat splitting enzymes such as lipases and phospholipases which act on naturally present or artificially added (phospho)lipids and several others. Most of the enzymes typically used are derived from fermentation processes involving fungi or bacteria.

Solid and liquid formulations bread improving compositions exist. They comprise one or more enzymes and/or other compounds; the exact composition of the bread improving compositions being depicted mainly by local demands, such as the type of bread to be baked and the available raw materials such as flour varieties.

There are several disadvantages connected to the use and handling of solid bread improving compositions. Handling problems occur in medium- and large size industrial bakeries. These bakeries would like to employ automatic dosing systems for ingredients such as bread improving compositions and yeast. However, solid bread improving compositions are difficult to pump and dose automatically in comparison with their liquid counterparts. Furthermore, such solid compositions make cleaning of the bread making machinery harder in comparison with their liquid counterparts. Another disadvantage with the solid forms is that the enzyme present in the bread improving composition, when added to the dough and mixed with the flour and water, has to dissolve in order to become active. In view of the low water activity of dough, this is an inefficient process and not all of the added enzyme activity dissolves.

Liquid bread improving compositions which are based on oil components are known in the prior art (e.g. EP-A-421,510 and EP-A- 572,051). These oil-based bread improving compositions have the same disadvantages as those described above for the solid compositions. Oil-based bread improving compositions are suspensions of solid particles, such as the enzymes, fat particles and/or other bread-improving substances, in an oil phase. Due to their usually high viscosity, oil-based bread improving compositions are still quite difficult to pump and dose, but more importantly they give severe problems in cleaning (CIP = cleaning in place). Analogous to the solid bread improving compositions, the enzyme containing particles in the oil-based suspension, have to dissolve in the water used for the preparation of the dough. As with solid compositions, this is an inefficient process and not all of the added enzyme activity dissolves.

In order to overcome some of the problems associated with the use of oil-based bread improving compositions, aqueous bread improving compositions have been used. WO 94/12623 describes water slurries comprising up to 40% of a solid mixture of bread improver ingredients and with the balance being water. The advantages of such compositions compared with the solid and oil-based ones are a decrease in the cost of manufacturing, increased ease of handling (pumping) and the fact that part of the enzyme will already be dissolved in the aqueous phase. Disadvantages associated with these water slurries are their limited stability even at low temperatures (see WO 94/12623 page 4, lines 23-24: at least 3 weeks at 4°C) which means production, handling and storage have to be carried out at low temperatures and the fact that these compositions are physically unstable (in WO 94/12623 page 5, lines 3-4 it is stated that "to avoid settling of the solid content of the LBI, regular agitation of the storage vessels may be carried out"). These limitations rule out the successful industrial use of such compositions. EP-A-0669082 describes aqueous bread improving compositions comprising an effective amount of a water-soluble food grade oxidant and an effective amount of at least one water-soluble bread-improving enzyme with the pH of the solution being 3.0-7.0. Although it has been stated that the presence of the oxidant has an advantageous impact on the shelf life of the aqueous bread improving compositions described, we were unable to identify such an effect. In fact, we found that aqueous solutions of baking enzymes and ascorbic acid (i.e. the oxidant) were very unstable under the conditions described in EP-A-0669082 (25°C and during 6 months). The only test carried out in EP-A-0669082 for the storage stability of the enzyme solution was the baking performance test using one enzyme concentration. However, this is not a good method for measuring residual enzyme activity since depending on the actual enzyme concentration in comparison with the dose-response curve, severe losses of enzymes activity of up to 50% may remain unnoticed. Only enzyme activity measurements using assays with (almost) linear dose-response relationships are reliable for drawing conclusions about storage stability.

USB11050B and US6039982 indicate that liquid enzyme preparations may, for instance, be stabilized by adding stabilizers such as a sugar, a sugar alcohol or another polyol, lactic acid or another organic acid.

In one aspect, the present invention provides a liquid bread improving composition comprising one or more enzymes, ascorbic acid and one or more polyds. Selected from the group ethylene glycol, propylene glycol glycerol, erythritol, xylitol, mannitol, sorbitol, inositol and galactitol, wherein when the composition comprises glycerol the glycerol content of the composition is from 10 to 90 wt%. These liquid bread improving compositions do not have any of the above mentioned disadvantages that are associated with the solid and oil-based bread improving compositions. The liquid bread improving compositions provided are storage stable, easy to pump, easy to dose in automatic dosing systems and pose no problems in deaning. Furthermore, in baking tests they perform better than solid and oil-based bread improving compositions.

Polyols are compounds containing several alcoholic hydroxyl groups. When present in high amounts in aqueous solutions, they lower the water activity to such an extent that processes which inactivate enzymes and degrade ascorbic acid and microbial infections are slowed down. This is of particular advantage for commercial produds such as the compositions of the present invention which ideally need a long shelf life (up to 6 months) at at least room or environmental temperatures. The stabilising effect of polyols is especially prominent at such temperatures i.e. from 15°C up to 40°C or so. Examples of suitable polyols which may be used in the compositions of the invention are ethylene glycol, propylene glycol, glycerol, erythritol, xylitol, mannitol, sorbitol, inositol and galactitol. Most preferred are glycerol and sorbitol.

Liquid compositions according to the invention comprising glycerol, comprise water and have a glycerol content from 10 to 90 wt%, preferably from 20 to 70 wt% and most preferably from 25 to 65 wt%. Liquid compositions according to the invention comprising sorbitol, comprise water and have a sorbitol content from 10 to 70 wt%, preferably from 20 to 60 wt%, most preferably from 30 to 50 wt%.

Liquid compositions according to the invention comprise ascorbic acid. A preferred content of ascorbic acid is from 0.1 to 20 wt%, more preferred from 0.2 to 10 wt%, and most preferred from 0.5 to 5 wt%.

Liquid compositions according to the invention may additionally comprise salts (e.g. sodium chloride, sodium acetate and/or calcium chloride), sugars (e.g. glucose, fructose, mannose, agarose, lactose, sucrose, trehalose and/or maltose), amino acids and polymers (e.g. starch, dextrins, dextran, xanthan, carboxymethylcellulose, polyethylene glycol, polyvinylpyrrolidone and/or polyvinylalcohol) and/or oligomeric forms thereof.

Liquid compositions according to the invention comprise one or more enzymes that may be selected from the group consisting of a carbohydrase, a protein modifying enzyme, a redox enzyme and a lipid modifying enzyme. Preferably, the liquid compositions of the invention may comprise an alpha-amylase, beta-amylase, amyloglucosidase, hemicellulase, xylanase, arabinofuranosidase, cellulase, glucanase, protease, aminopeptidase, carboxypeptidase, glucose oxidase, sulfhydryl oxidase, lipoxygenase, lipase and/or a phospholipase. Most preferably, the compositions comprise fungal alpha-amylase from *Aspergillus oryzae* and a fungal hemicellulase form *Aspergillus niger* and one or more of the other enzymes listed above. The enzymes may be obtained from large scale fermentation processes involving micro-organisms as mentioned before. These processes are well known in the art. In most cases, the enzymes are secreted by the micro-organisms into the fermentation broth. At the end of the fermentation process, the cell biomass is removed. Depending on the enzyme concentration in the broth, the latter may be concentrated further and optionally washed by ultrafiltration. The liquid bread improving composition may be generated in the following way: to an aqueous solution of ascorbic acid with a pH preferably from 4 to 5 (obtainable by adding buffer salts), the polyol is added followed by the enzyme concentrate (or mixture of enzyme concentrates) with the concentrations of all the constituents being added depending on the specifications of the final product. Alternatively, the enzyme concentrates or mixture of concentrates may be dried by known techniques such as spray drying after which the enzyme powder can be dissolved in an aqueous solution containing the ascorbic acid and polyol, orfirst dissolved in water containing ascorbic acid and a buffer and subsequently adding the polyol.

In a second aspect, the invention provides the use of a polyol to stabilise a liquid bread improving composition comprising one or more enzymes and ascorbicacid.

In a third aspect, the invention provides a process for preparing a dough comprising the mixing of flour, yeast, water and an effective amount of a liquid bread improving composition of the present invention as described above. The preparation of dough involves a series of steps such as mixing, moulding and fermentation resulting in leavening of the dough and is known in the art. The effective amount of the bread improving composition is defined as the amount that gives the desired improvements in the dough preparation and/or the baked products; the effective amount is easily determined by the skilled person.

In a fourth aspect, the invention provides a dough which may be formed by mixing flour, yeast, water and an effective amount of a liquid bread improving composition of the present invention as described above. The dough comprises at least one enzyme, a polyol at concentration from 0.01 to 0.5 wt%, preferably from 0.1 to 0.3 wt% and ascorbic acid at a concentration from 1*10⁻⁴ wt% to 0.1 wt%, preferably from 1*10⁻³ wt% to 0.02 wt%.

In a fifth aspect, the invention provides a process of preparing a baked product from a dough of which the preparation is described above.

In a sixth aspect, the invention provides the use of the liquid bread improving compositions of the present invention for the preparation of a dough and the baked product thereof. The compositions of the invention may be used to prepare a number of baked products such as bread, pizza base, crumpet, leavened cakes and fruit or malt loaves.

### Example 1

### Stability of liquid enzymes at ambient temperature

The stability of the following baking enzymes, fungal α-amylase, hemicellulase and glucose oxidase, was tested in aqueous formulations containing various concentrations of glycerol (0, 30 and 50 wt%) at 25°C over 6 months. Samples were analysed for their residual activity by specific assays for fungal α-amylase, hemicellulase and glucose oxidase activity, respectively. In Table 1 the relative residual activities of these samples over time are given. All values are the average of duplicate determinations. As can be seen from these results, the stability of fungal α-amylase, hemicellulase and glucose oxidase at 25°C in the presence of 30 or 50% glycerol is considerably improved as compared with the stability of these enzymes in the absence of glycerol. In particular, fungal α-amylase in the presence of 50% glycerol was very stable during 3 months at 25°C. At 4°C more than 95% of the enzyme activity remained after storage for 26 weeks in the presence of 30 to 50 wt% glycerol.

Fungal α-amylase activity was measured in FAU (fungal amylase unit). 1 FAU is defined as the amount of enzyme that converts 1 gram of soluble starch per hour at pH 5.0 and 30°C into a product having, after reaction with iodine, an equal absorption at 620 nm as a reference solution of CoCl₂ solution in potassium bichromate.

Hemicellulase activity was measured in LYX-units. 1 LYX unit is defined as the amount of enzyme that causes at pH 2.75 and 47°C a decrease in viscosity at a rate of 1 min⁻¹ of wheat arabinoxylan solution that has a standardised viscosity and which is measured in a Ubbelohde n°1 viscometer.

Glucose oxidase activity was measured in Sarrett units. 1 Sarrett unit is defined as the amount of enzyme that will cause an uptake of 10 mm³ of oxygen per minute in a Warburg's manometer at pH 5.8 and 30°C, in the presence of excess oxygen and 3.3% glucose monohydrate.

**Table 1: Relative residual enzyme activities of liquid formulations of fungal α-amylase, hemicellulase and glucose oxidase, stored at 25°C at the indicated concentrations of glycerol.**

| enzyme: | fungal α-amylase | | | hemicellulase glucose oxidase | | | | | |
|---|---|---|---|---|---|---|---|---|---|
| glycerol: | 0% | 30% | 50% | 0% | 30% | 50% | 0% | 30% | 50% |
| weeks | | | | | | | | | |
| 0 | 100 | 100 | 100 | 100 | 100 | 100 | 100 | 100 | 100 |
| 3 | 80 | 98 | 99 | 72 | 94 | 99 | 76 | 97 | 100 |
| 6 | 68 | 96 | 99 | 60 | 91 | 99 | 64 | 95 | 98 |
| 9 | n.d. | 94 | 98 | n.d. | 89 | 96 | n.d. | 90 | 98 |
| 12 | n.d. | 90 | 98 | n.d. | 86 | 91 | n.d. | 84 | 92 |
| 15 | n.d. | 86 | 96 | n.d. | 80 | 91 | n.d. | 80 | 89 |
| 18 | n.d. | 83 | 95 | n.d. | 77 | 89 | n.d. | 76 | 86 |
| 22 | n.d. | 80 | 94 | n.d. | 72 | 87 | n.d. | 71 | 80 |
| 24 | n.d. | 77 | 93 | n.d. | 71 | 86 | n.d. | 70 | 82 |
| 26 | n.d. | 73 | 92 | n.d. | 69 | 85 | n.d. | 69 | 76 |

| | | | | | | | | | |
|---|---|---|---|---|---|---|---|---|---|
| n.d. = not determined | | | | | | | | | |

### Example 2

### Stability and performance of liquid and solid bread improving compositions for crusty bread

An enzyme-based bread improving composition for crusty bread was produced in liquid and solid formulations. Both formulations contained 26 FAU of fungal α-amylase, 110 LYX of fungal hemicellulase and 23 Sarrett units of glucose oxidase per gram of product, in combination with 2.4 wt% of ascorbic acid. The liquid product further contained 2 wt% salt, 0.7 wt% sodium bicarbonate, 62 wt% glycerol and 30 wt% water. The solid product contained 95% wheat flour. Both products were stored for 3 months at 25°C. Samples of both products were taken at set times, in order to analyse the residual enzyme activities and to perform baking trials. The following recipe was used:
- flour 3000 g Kolibri (Meneba)
- 1740 g water for the solid formulation and 1725 g for the liquid composition
- 30 g dried yeast (Fermipan red, DSM-Bakery Ingredients, Delft, The Netherlands)
- 60 g salt
- 15 g bread improving composition

The ingredients were mixed together and used to form twelve 350 gram doughs. A first and second fermentation, each of 15 minutes at 25°C were performed. After shaping of the dough, a final fermentation was performed for six of the doughs for 70 minutes (short process) and for the remaining six doughs for 90 minutes (long process) at 30°C. Before baking for 25 minutes at 240°C, the surface of the dough pieces was cut. After baking the loaves were allowed to cool and bread volume was determined as an average of triplicate measurements using the rapeseed displacement method. The results obtained from the enzyme activity determinations and from the baking trials are shown in Table 2. The loaf volumes are presented relative to the loaf volume of the short fermentation of the solid bread improving composition at week 0 (=100% by definition).

From these results it is clear that the enzyme activities of both the solid and the liquid bread improving compositions are very stable over time. The baking performance of the bread improving compositions is very consistent with the storage stability. The length of storage of the bread improving compositions did not effect bread volume.

It is remarkable that the averaged volumes of the loaves prepared with the liquid bread improving composition appear to be higher than with the solid bread improving composition. This was observed for the short process (104% versus 100%) and for the long process (109% versus 103%). A possible explanation for this is that the soluble enzymes in the liquid bread improving composition are more efficient in attacking their substrates compared with their counterparts in the solid bread improving compositions which have to dissolve in the water added to the dough before they can attack their substrates.

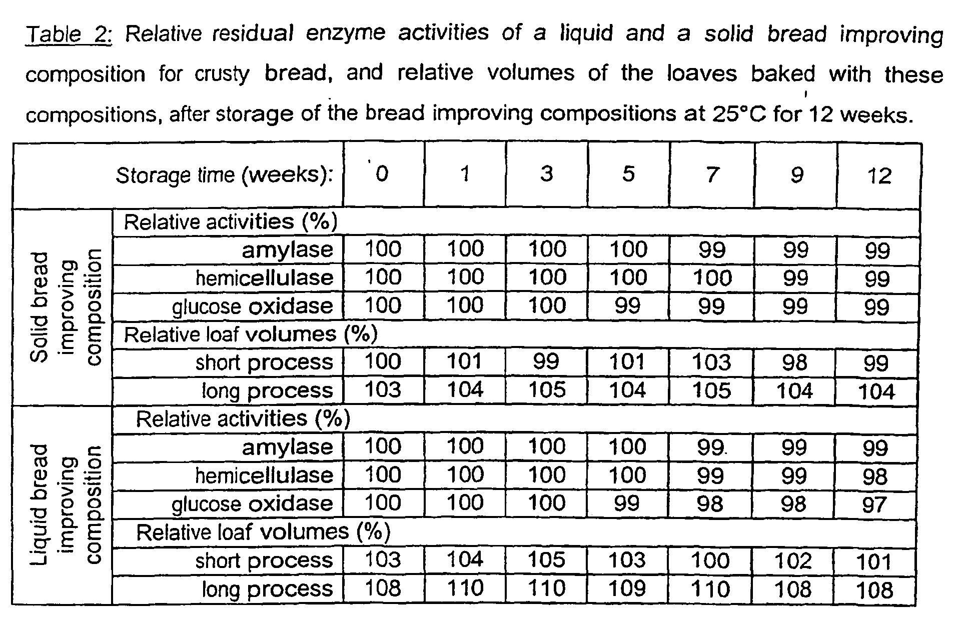

### Example 3

### Storage stability of bread improving compositions and their performance in the preparation of crusty bread.

Liquid bread improving compositions (referred to as CBBI-1) were prepared having the following composition:
- 1.3 wt% Fermizyme^{®} P80L containing fungal α-amylase
- 2.75 wt% Fermizyme^{®} HS4000L containing hemicellulase
- 1.13 wt% Fermizyme^{®} GO4000L containing glucose oxidase (all Fermizyme® products are from DSM Bakery Ingredients, Delft, The Netherlands)
- 2.4 wt% ascorbic acid
- 1.50 wt% sodium chloride
- 2 wt% sodium acetate
- 0.05 wt% malt extract
- the indicated concentrations of polyol (Table 3)
- 0.02% sorbate in the compositions containing sorbitol as the polyol
- water to balance 100%

The compositions were stored for 3 months at 25°C and analysed for their residual enzyme activity and ascorbic acid concentration. Ascorbic acid content was determined with a titrimetric method in an acidic solution using iodine (0.1 N) and soluble starch as an indicator.

**Table 3. Residual activity of hemicellulase and glucose oxidase and residual concentration of ascorbic acid (AA) in liquid bread improving compositions CBBI-1 containing the indicated concentration of glycerol or sorbitol.**

| Code | Polyol | | AA % | Hemicellulase % activity | Glucose oxidase % activity |
|---|---|---|---|---|---|
| | Type | (%) | | | |
| CBBI-1a | Glycerol | 50 | 81 | 92 | 83 |
| CBBI-1b | Glycerol | 40 | 73 | 91 | 90 |
| CBBI-1c | Glycerol | 30 | 36 | 74 | 68 |
| CBBI-1d | Sorbitol | 50 | 77 | 94 | 94 |
| CBBI-1e | Sorbitol | 40 | 76 | 90 | 89 |

Table 3 shows that with increasing polyol concentrations, the stability of the enzymes as well as ascorbic acid (AA) is improved.

Compositions CBBI-1a (containing 50% glycerol) and CBBI-1d (containing 40% sorbitol) were compared with two solid bread improving compositions with regard to their bread improving properties in a baking trial for crusty bread. One solid bread improving composition (referred to as CBBI-2) contained similar enzyme and ascorbic acid levels as described for the liquid formulations but it was formulated on wheat flour. The second solid bread improving composition (referred to as CBBI-3) was a traditional bread improving composition for crusty bread (GB Top, DSM Bakery Ingredients, Spain) containing enzymes, ascorbic acid, emulsifier (DATEM) and wheat flour. A baking trial was performed as described in Example 2, using the bread improving compositions CBBI-1a, CBBI-1d, CBBI-2 and CBBI-3 which were all stored for 3 months at 25°C priori to the baking trial.

**Table 4: Bread making properties of liquid and solid bread improving compositions in a baking trial for crusty bread.**

| | | | | | |
|---|---|---|---|---|---|
| Bread improving composition | | CBBI-1a | CBBI-1d | CBBI-2 | CBBI-3 |
| Dough properties | After mixing | | | | |
| | Firmness | 7 | 7 | 6 | 7 |
| | 1 = slack; 10 = firm | | | | |
| | Stickiness | 7 | 7 | 6 | 7 |
| | 1 = sticky; 10 = dry | | | | |
| | At moulding | | | | |
| | Firmness | 7 | 7 | 6 | 7 |
| | 1 = slack; 10 = firm | | | | |
| | Stickiness | 7 | 7 | 6 | 7 |
| | 1 = sticky; 10 = dry | | | | |
| Bread properties | Loaf volumes (ml) | | | | |
| | short fermentation | 1639 | 1625 | 1555 | 1574 |
| | long fermentation | 1720 | 1728 | 1557 | 1743 |
| | Baking performance | 7 | 7 | 5 | 7 |
| | 1 = bad; 10 = excellent | | | | |
| | Crust colour | 6 | 7 | 5 | 6 |
| | 1 = light; 10 = dark | | | | |
| | Crumb structure | 6 | 7 | 5 | 6 |
| | 1 = irregular; 10 = regular | | | | |
| | Taste and smell | 7 | 7 | 6 | 5 |
| | 1 = bad; 10 = excellent | | | | |

In Table 4 the bread making properties as observed in this baking trial, are reported. From these results it is clear that the dough prepared with the liquid bread improving composition has a good firmness and dryness, when compared with the doughs prepared with solid bread improving compositions. With regard to the loaf volumes the liquid bread improver, CBBI-1, showed higher loaf volumes than CBBI-2 for a short and long process and a higher loaf volume than CBBI-3 for a short process. A possible explanation for this is the higher efficiency of solubilised enzymes in comparison with their dried counterparts in the solid bread improving compositions. Additionally, the bread properties of the baked loaves prepared with the liquid compositions were better than those of loaves prepared with CBBI-2, and were virtually identical to those of loaves prepared with CBBI-3. The liquid bread improving composition CBBI-1, showed the best overall results for dough and bread properties and/or loaf volumes.

### Example 4

### Storage stability of bread improving compositions and their performance in the preparation of tin bread.

A liquid bread improving composition (referred to as TBBf-1a), composed of 3.6 wt% Fermizyme P80L, 0.90 wt% Fermizyme HS4000L, 0.15 wt% Fermizyme GO4000L, 0.6 wt% ascorbic acid, 1.50 wt% sodium chloride, 0.4 wt% sodium acetate, 0.05 wt% malt extract, 50 wt% glycerol and 42.8 wt% water, was prepared and stored for 3 months at 4° and 25°C.

**Table 5. Residual activity of alpha amylase, hemicellulase and glucose oxidase and residual concentration of ascorbic acid (AA) in a liquid bread improving composition TBBI-1a containing 50% glycerol.**

| | Storage temperature | |
|---|---|---|
| | 4°C | 25°C |
| Ascorbic acid (% concentration) | 90 | 83 |
| Fungal alpha amylase (% residual activity) | 95 | 85 |
| Hemicellulase (% residual activity) | 96 | 88 |
| Glucose oxidase (% residual activity) | 92 | 87 |

Table 5 shows that the storage temperature has an effect on the stability of the enzymes and also of ascorbic acid.

Composition TBBI-1a and a similar composition TBBI-1b containing 50% sorbitol instead of glycerol, were compared with an oil-based liquid bread improving composition and a traditional solid bread improving composition, with regard to bread making properties in a baking trial for tin bread. The oil-based liquid bread improver (LBI-wit, DSM Bakery Ingredients, The Netherlands - referred to as TBBI-2) was composed of vegetable oil, fat, emulsifier, salt and enzymes. The traditional solid bread improving composition (Gb-wit, DSM Bakery Ingredients, The Netherlands - referred to as TBBI-3) contained enzymes, ascorbic acid, soy flour, milk constituents, emulsifier and wheat flour. All three products were stored for 3 months at 25°C prior to the baking trials. These trials were performed using the following recipe:
- 3500 g flour Edelweiss (Meneba)
- 2030 g water (2015 g for TBBI-1)
- 70 g block yeast (Koningsgist, DSM Bakery Ingredients, The Netherlands)
- 70 g salt (in case of TBB1-2 no extra salt was added)
- 15 g TBBI-1a, or TBBI-1b, or 105 g TBBI-2, or 175 g TBBI-3

The ingredients were mixed together and used to form six 875 gram doughs. The doughs were fermented for 45 minutes at 34°C. After shaping of the dough a final fermentation was performed for 70 minutes at 38°C. The bread was then baked for 30 minutes at 210°C. The loaves were allowed to cool and mean loaf volume was calculated from the volumes determined using the rapeseed displacement method for 3 loaves. Other dough and bread properties were also determined during the process and after baking. In Table 4 the bread making properties observed in this baking trial, are reported. From these results it is clear that the use of the liquid bread improving composition, TBBI-1, in a tin bread baking process gives good dough and bread properties as compared with oil-based or traditional solid bread improving compositions. The liquid bread improving composition also showed an increased volume as compared with the bread improving compositions containing solid enzyme particles, as was seen in the Examples 2 and 3 also.

**Table 5: Bread making properties of liquid and solid bread improving compositions in a baking trial for tin bread.**

| Bread improving composition | | TBBI-1a | TBBI-1b | TBBI-2 | TBBI-3 |
|---|---|---|---|---|---|
| Dough properties | After mixing | | | | |
| | Firmness | 7 | 7 | 6 | 6 |
| | 1 = slack; 10 = firm | | | | |
| | Stickiness | 7 | 7 | 6 | 6 |
| | 1 = sticky; 10 = dry | | | | |
| | At moulding | | | | |
| | Firmness | 7 | 7 | 6 | 6 |
| | 1 = slack; 10 = firm | | | | |
| | Stickiness | 7 | 7 | 6 | 6 |
| | 1 = sticky; 10 = dry | | | | |
| Bread properties | Loaf volumes (ml) | 4467 | 4453 | 4323 | 4344 |
| | Baking performance | 8 | 8 | 7 | 7 |
| | 1 = bad; 10 = excellent | | | | |
| | Crust colour | 6 | 6 | 5 | 5 |
| | 1 = light; 10 = dark | | | | |
| | Crumb structure | 8 | 8 | 8 | 8 |
| | 1 = irregular, 10 = regular | | | | |
| | Crumb softness | 7 | 7 | 7 | 7 |
| | 1 = firm; 10 = soft | | | | |
| | Taste and smell | 8 | 8 | 7 | 6 |
| | 1 = bad; 10 = excellent | | | | |

## Claims

1. A liquid bread improving composition comprising one or more enzymes, ascorbic acid and one or more polyols, selected from the group ethylene glycol, propylene glycol, glycerol, erythritol, xylitol, mannitol, sorbitol, inositol and galactitol, wherein when the composition comprises glycerol the glycerol content of the composition is from 10 to 90 wt%.

2. A composition according to claim 1 **characterised by** a sorbitol content from 10 to 70 wt%.

3. A composition according to anyone of claims 1-2 **characterised by** an ascorbic acid content from 0.1 to 20 wt%.

4. A composition according to anyone of the preceding claims **characterised in that** the enzyme is a carbohydrase, a protein modifying enzyme, a redox enzyme and/or a lipid modifying enzyme.

5. A composition according claim 4 wherein the enzyme is alpha-amylase, beta-amylase, amyloglucosidase, hemicellulase, xylanase, arabinofuranosidase, cellulase, glucanase, protease, aminopeptidase, carboxypeptidase, glucose oxidase, sulfhydryl oxidase, lipoxygenase, lipase and/or phospholipase.

6. Use of one or more polyols selected from the group ethylene glycol, propylene glycol, glycerol, erythritol, xylitol, mannitol, sorbitol, inositol and galactitol, wherein when the composition comprises glycerol the glycerol content is from 10 to 90 wt%, to stabilise a liquid bread improving composition comprising one or more enzymes and ascorbic acid.

7. A process for preparing a dough comprising mixing flour, yeast, water and an effective amount of a composition as defined in anyone of claims 1-5 or stabilized according to claim 6.

8. A dough formed by mixing flour, yeast, water and an effective amount of a composition as defined in anyone of claims 1 to 5 or stabilized according to claim 6, and/or comprising at least one enzyme, a polyol at a concentration of from 0.01 to 0.5 wt% and ascorbic acid at a concentration from 1*10⁻⁴ to 0.1 wt%.

9. A process for preparing a baked product comprising baking a dough formed using a composition according to anyone of claims 1 to 5 or stabilized according to claim 6 or a dough prepared according to claim 7 or a dough according to claim 8.

10. Use of a liquid bread improving composition as defined in anyone of claims 1-5 or a composition stabilized according to claim 6 for the preparation of a dough and the baked product thereof.

11. A baked product obtainable by baking a dough according to claim 8 or prepared by a process according to claim 7.

## Patentansprüche

1. Flüssiges Brotverbesserungsmittel, das ein oder mehrere Enzyme, Ascorbinsäure sowie ein oder mehrere Polyole aus der Reihe Ethylenglykol, Propylenglykol, Glyzerin, Erythrit, Xylit, Mannit, Sorbit, Inosit und Galactit enthält, wobei, wenn das Mittel Glyzerin enthält, der Glyzeringehalt des Mittels 10 bis 90 Gew.-% beträgt.

2. Zusammensetzung nach Anspruch 1, **dadurch gekennzeichnet, daß** sie einen Sorbitgehalt von 10 bis 70 Gew.-% aufweist.

3. Zusammensetzung nach einem der Ansprüche 1 bis 2, **dadurch gekennzeichnet, daß** sie einen Ascorbinsäuregehalt von 0,1 bis 20 Gew.-% aufweist.

4. Zusammensetzung nach einem der vorhergehenden Ansprüche, **dadurch gekennzeichnet, daß** es sich bei dem Enzym um eine Carbohydrase, ein proteinmodifizierendes Enzym, ein Redox-Enzym und/oder ein lipidmodifizierendes Enzym handelt.

5. Zusammensetzung nach Anspruch 4, wobei es sich bei dem Enzym um alpha-Amylase, beta-Amylase, Amyloglykosidase, Hemicellulase, Xylanase, Arabinofuranosidase, Cellulase, Glucanase, Protease, Aminopeptidase, Carboxypeptidase, Glucoseoxidase, Sulfhydryloxidase, Lipoxygenase, Lipase und/oder Phospholipase handelt.

6. Verwendung von einem oder mehreren Polyolen aus der Gruppe Ethylenglykol, Propylenglykol, Glyzerin, Erithrit, Xylit, Mannit, Sorbit, Inosit und Galactit, wobei, wenn das Mittel Glyzerin enthält, der Glyzeringehalt der Zusammensetzung 10 bis 90 Gew.-% beträgt, zur Stabilisierung eines flüssigen Brotverbesserungsmittels, das ein oder mehrere Enzyme und Ascorbinsäure enthält.

7. Verfahren zur Herstellung eines Teigs, bei dem man Mehl, Hefe, Wasser und eine wirksame Menge eines nach einem der Ansprüche 1-5 definierten oder nach Anspruch 6 stabilisierten Mittels mischt.

8. Teig, der durch Mischen von Mehl, Hefe, Wasser und einer wirksamen Menge eines Mittels nach einem der Ansprüche 1 bis 5 gebildet wird oder nach Anspruch 6 stabilisiert wird und/oder mindestens ein Enzym, ein Polyol, in einer Konzentration von 0,01 bis 0,5 Gew.-% sowie Ascorbinsäure in einer Konzentration von 1*10⁻⁴ bis 0,1 Gew.-% enthält.

9. Verfahren zur Herstellung einer Backware, bei dem man einen Teig, der mit einem Mittel nach einem der Ansprüche 1 bis 5 gebildet wurde oder nach Anspruch 6 stabilisiert wurde oder einen Teig, der nach Anspruch 7 gebildet wurde oder einen Teig nach Anspruch 8, bäckt.

10. Verwendung eines flüssigen Brotverbesserungsmittels nach einem der Ansprüche 1-5 oder eines Mittels, das nach Anspruch 6 stabilisiert wurde, zur Herstellung eines Teigs und der damit hergestellten Backware.

11. Backware, erhältlich dadurch, daß man einen Teig nach Anspruch 8 oder einen Teig, der mit Hilfe eines Verfahrens nach Anspruch 7 hergestellt wurde, bäckt.

## Revendications

1. Composition liquide d'amélioration du pain comprenant une ou plusieurs enzymes, de l'acide ascorbique et un ou plusieurs polyols sélectionnés dans le groupe constitué de l'éthylèneglycol, du propylèneglycol, du glycérol, de l'érythritol, du xylitol, du mannitol, du sorbitol, de l'inositol et du galactitol, dans laquelle, lorsque la composition comprend du glycérol, la teneur en glycérol de la composition varie de 10 à 90 % en poids.

2. Composition selon la revendication 1, **caractérisée par** une teneur en sorbitol allant de 10 à 70 % en poids.

3. Composition selon l'une quelconque des revendications 1 et 2, **caractérisée par** une teneur en acide ascorbique allant de 0,1 à 20 % en poids.

4. Composition selon l'une quelconque des revendications précédentes, **caractérisée en ce que** l'enzyme est une carbohydrase, une enzyme de modification de protéine, une enzyme redox et/ou une enzyme de modification de lipide.

5. Composition selon la revendication 4, dans laquelle l'enzyme est l'alpha-amylase, la bêta-amylase, l'amyloglucosidase, l'hémicellulase, la xylanase, l'arabinofuranosidase, la cellulase, la glucanase, la protéase, l'aminopeptidase, la carboxypeptidase, la glucose oxydase, la sulfhydryl oxydase, la lipoxygénase, la lipase et/ou la phospholipase.

6. Utilisation d'un ou de plusieurs polyols sélectionnés dans le groupe constitué de l'éthylèneglycol, du propylèneglycol, du glycérol, de l'érythritol, du xylitol, du mannitol, du sorbitol, de l'inositol et du galactitol, dans laquelle, lorsque la composition comprend du glycérol, la teneur en glycérol varie de 10 à 90 % en poids, pour stabiliser une composition liquide d'amélioration du pain comprenant une ou plusieurs enzymes et de l'acide ascorbique.

7. Procédé de préparation d'une pâte comprenant un mélange de farine, de levure, d'eau et d'une quantité efficace d'une composition telle que définie dans l'une quelconque des revendications 1 à 5 ou stabilisée selon la revendication 6.

8. Pâte formée par un mélange de farine, de levure, d'eau et d'une quantité efficace d'une composition telle que définie selon l'une quelconque des revendications 1 à 5 ou stabilisée selon la revendication 6, et/ou comprenant au moins une enzyme, un polyol à une concentration allant de 0,01 à 0,5 % en poids et de l'acide ascorbique à une concentration de 1 x 10⁻⁴ à 0,1 % en poids.

9. Procédé de préparation d'un produit cuit comprenant la cuisson d'une pâte formée à l'aide d'une composition selon l'une quelconque des revendications 1 à 5 ou stabilisée selon la revendication 6 ou d'une pâte préparée selon la revendication 7 ou d'une pâte selon la revendication 8.

10. Utilisation d'une composition liquide d'amélioration du pain telle que définie selon l'une quelconque des revendications 1 à 5 ou d'une composition stabilisée selon la revendication 6 pour la préparation d'une pâte et de son produit cuit.

11. Produit cuit disponible par la cuisson d'une pâte selon la revendication 8 ou préparée par un procédé selon la revendication 7.
